## Europäisches Patentamt

## European Patent Office

## Office européen des brevets

(11) Veröffentlichungsnummer: **0 540 072 A1**

# EUROPÄISCHE PATENTANMELDUNG

(21) Anmeldenummer: **92203031.7**

(22) Anmeldetag: **02.10.92**

(51) Int. Cl.5: **C01F 7/76**

(30) Priorität: **30.10.91 DE 4135720**

(43) Veröffentlichungstag der Anmeldung:
**05.05.93 Patentblatt 93/18**

(84) Benannte Vertragsstaaten:
**AT BE DE ES FR GB IT NL SE**

(71) Anmelder: **METALLGESELLSCHAFT**
**Akfiengesellschaft**
**Reuterweg 14**
**W−6000 Frankfurt am Main(DE)**

(72) Erfinder: **Bandel, Gebhard, Dr.**
**Kirchgasse 3**
**W−6000 Frankfurt am Main(DE)**
Erfinder: **Fitting, Arno, Dr.**
**Heinrich−Heine−Strasse 1**
**W−6392 Neu−Anspach 1(DE)**
Erfinder: **Samant, Gurudas, Dr.**
**Zur Schmiede 1**
**W−3555 Fronhausen(DE)**
Erfinder: **Tacke, Michael**
**Krokusweg 20**
**W−6382 Friedrichsdorf(DE)**

(54) **Verfahren zur Spaltung von Natriumsulfat oder Kaliumsulfat enthaltenden Stoffen.**

(57) Natriumsulfat oder Kaliumsulfat enthaltende Stoffe werden durch thermische Behandlung gespalten. Zur Vermeidung von Agglomeration und $H_2S$ − Bildung erfolgt die Spaltung in einer Wirbelschicht, in reduzierender Atmosphäre im Gebiet der $NaAlO_2$ − Bildung in Abhängigkeit vom $SO_2$ − Partialdruck mit einem Sauerstoff − Partialdruck von $10^{-4}$ bis $10^{-14}$ bar, unter Zusatz von $Al_2O_3$ und/oder $Al(OH)_3$ enthaltenden Stoffen mit einer Korngröße unter 3 mm in einer zur Bildung von $NaAlO_2$ überstöchiometrischen Menge, bei Temperaturen von 900 − 1300°C, unter Erzeugung mindestens eines Teiles der erforderlichen Reaktionswärme durch Verbrennung von kohlenstoffhaltigen Stoffen in der Wirbelschicht, und unter Entfernung des $SO_2$ − Gehaltes aus dem Abgas.

Fig. 1

EP 0 540 072 A1

Die Erfindung betrifft ein Verfahren zur Spaltung von Natriumsulfat oder Kaliumsulfat enthaltenden Stoffen unter Abspaltung von $SO_2$ durch thermische Behandlung unter reduzierenden Bedingungen und unter Zusatz von $Al_2O_3$ enthaltenden Stoffen.

Die Verwendung von Schwefelsäure in der Industrie ergibt eine Vielzahl von Natriumsulfat und/oder Kaliumsulfat enthaltenden Abfallsäuren, Filtersalzen oder Nebenprodukten. Verschmutzte Abfallsäuren fallen insbesondere bei der Herstellung von organischen Zwischenprodukten, Farben und Lacken, bei der Alkoholsynthese, der Raffination von Erdöl, bei Alkylierungsprozessen und beim $TiO_2-$Aufschluß in der Pigmentindustrie an. Filtersalze entstehen bei der Aufkonzentrierung der Abfallsäuren. Große Mengen an Salzen fallen bei der Rauchgaswäsche an.

Je nach Herkunft enthalten diese Stoffe neben Natriumsulfat und/oder Kaliumsulfat Schwefelsäure und andere Metallsulfate, wie insbesondere Eisensulfat, sowie organische Bestandteile. Diese Stoffe müssen aufgearbeitet werden, da eine Deponie oder Verklappung aus Umweltgründen nicht mehr möglich ist.

Aus der $EP-OS$ 91 948 ist es bekannt, Alkalisulfate enthaltende Stoffe mit festem Kohlenstoff in einem Schmelzzyklon bei $900-1400°C$ unter stark reduzierenden Bedingungen in den schmelzflüssigen Zustand zu überführen und dabei mindestens 80% der Alkalisulfate in Alkalisulfide umzusetzen. Die Alkalisulfide werden anschließend mit $CO_2$ und Wasserdampf in Alkalicarbonate umgesetzt. Bei diesem Verfahren besteht die Gefahr der Ansatzbildung von schmelzflüssiger Phase. Außerdem entsteht bei der Umsetzung zu Carbonat $H_2S$.

Aus der $AT-PS$ 349 494 ist ebenfalls ein Schmezverfahren bekannt, bei dem die Umsetzung von Natriumsulfat zu $Na_2S$ unter stark reduzierenden Bedingungen bei Temperaturen über $1000°C$ erfolgt. Das gebildete $Na_2S$ wird mit Wasser und $ZnO$ zu $NaOH$ umgesetzt. Auch hier besteht die Gefahr der Ansatzbildung, und bei der Umsetzung des $Na_2S$ entsteht $H_2S$.

Aus der $US-PS$ 4 035 228 ist es bekannt, organische Bestandteile enthaltende Ablaugen aus der Zellstoffherstellung im Drehrohrofen zu spalten. Die Ablauge wird unter Zusatz von $Al_2O_3$, Kohle und Verbrennungsasche pelletiert und in dieser Form in den Drehrohrofen eingesetzt. Die Spaltung erfolgt unter stark reduzierenden Bedingungen innerhalb der Pellets. Die aus dem Drehrohrofen ausgetragene Verbren$-$nungsasche wird aufgemahlen. Ein Teil der $NaAlO_2-$haltigen Asche wird in die Pelletierung zurückgeführt, der andere Teil wird in Wasser gelöst, das Aluminium wird als $Al_2O_3$ gefällt und in die Pelletierung zurückgeführt und das Natrium als $Na_2CO_3$, $Na_2SO_3$ oder $NaHCO_3$ gefällt. Bei den stark reduzierenden Bedingungen bilden sich intermediär schmelzflüssige Phasen, wie z.B. $Na_2S-Na_2SO_4$. Dadurch besteht die Gefahr der Agglomeration und Ansatzbildung. Außerdem sind lange Verweilzeiten notwendig. Bei der Reduktion kann in den Pellets $Na_2S$ erhalten bleiben. Dies führt in der anschließenden Laugung zur Bildung von $H_2S$. Durch die erforderliche Pelletierung and anschließende Aufmahlung ist das Verfahren sehr aufwendig.

Der Erfindung liegt die Aufgabe zugrunde, eine Aufarbeitung von natriumsulfat$-$ und/oder kaliumsul$-$fathaltigen Stoffen unter Vermeidung der geschilderten Nachteile in möglichst wirtschaftlicher Weise durchzuführen.

Die Lösung dieser Aufgabe erfolgt bei dem eingangs geschilderten Verfahren dadurch, daß die thermische Spaltung erfolgt

a) in einer Wirbelschicht,

b) in reduzierender Atmosphäre im Gebiet der $NaAlO_2-$Bildung in Abhängigkeit vom $SO_2-$Partialdruck mit einem Sauerstoff$-$Partialdruck von $10^{-4}$ bis $10^{-14}$ bar,

c) unter Zusatz von $Al_2O_3$ und/oder $Al(OH)_3$ enthaltenden Stoffen mit einer Korngröße unter 3 mm in einer zur Bildung von $NaAlO_2$ überstöchiometrischen Menge,

d) bei Temperaturen von $900 - 1300°C$,

e) unter Erzeugung mindestens eines Teiles der erforderlichen Reaktionswärme durch Verbrennung von kohlenstoffhaltigen Stoffen in der Wirbelschicht, und

f) unter Entfernung des $SO_2-$Gehaltes aus dem Abgas.

Die zu verarbeitenden Stoffe liegen meistens in flüssiger Form oder als Suspension vor, wobei die Feststoffe im allgemeinen in einer Korngröße unter 1 mm vorliegen. In fester Form vorliegende Stoffe werden zweckmäßigerweise suspendiert und in dieser Form in die Wirbelschicht chargiert. Als Wirbel$-$schicht kann eine klassische Wirbelschicht mit definierter Bettoberfläche oder eine zirkulierende Wirbel$-$schicht verwendet werden. Der Sauerstoffpartialdruck richtet sich nach der Temperatur und dem durch die $SO_2-$Entwicklung vorliegenden $SO_2-$Partialdruck. Der jeweils erforderliche Sauerstoffpartialdruck ist aus dem Diagramm zu entnehmen. Als $Al_2O_3$ oder $Al(OH)_3$ enthaltende Stoffe können Bauxit, Abfälle aus der Aluminiumindustrie, Tonerde oder entsprechende Aschen eingesetzt werden. Wenn die zu verarbeitenden Stoffe neben Natriumsulfat und/oder Kaliumsulfat keine oder nur sehr geringe Mengen an anderen Metallen enthalten,empfiehlt sich der Zusatz von reinem $Al_2O_3$ bzw. $Al(OH)_3$, da dann auch ein reines Alkali − Aluminat anfällt. Bei zu verarbeitenden Stoffen, die größere Mengen anderer Metalle enthalten, können verunreinigtes $Al_2O_3$ bzw. $Al(OH)_3$ zugesetzt werden. Wenn die zu verarbeitenden Stoffe in flüssiger Form oder in Form einer Suspension in die Wirbelschicht chargiert werden, ist ein Hilfsbett aus festen Materialien erforderlich. Dieses kann durch die Zusatzstoffe gebildet werden. Die Zusatzstoffe können in Mischung mit den zu verarbeitenden Stoffen oder separat in die Wirbelschicht chargiert werden. Eine fünffache stöchiometrische Menge der Zusatzstoffe ist auf jeden Fall ausreichend. Eine größere Menge stört zwar nicht, erfordert aber einen größeren Aufwand. Als kohlenstoffhaltige Stoffe können feste, gasförmige oder flüssige Stoffe oder deren Mischungen in die Wirbelschicht eingesetzt werden. Ein Teil der erforderlichen kohlenstoffhaltigen Brennstoffe kann bereits in den zu verarbeitenden Stoffen in Form von organischem Kohlenstoff vorliegen. Ein Teil des erforderlichen Brennstoffes kann auch in Form von Schwefel oder oxidierbaren Schwefelverbindungen eingebracht werden. Die Brennstoffe können separat oder in Mischung mit den zu verarbeitenden Stoffen und/oder mit den Zusatzstoffen in die Wirbelschicht eingebracht werden. Ein Teil der erforderlichen Reaktionswärme kann durch vorgewärmte Fluidisierungsluft in die Wirbelschicht eingebracht werden. Falls in den zu verarbeitenden Stoffen Sulfite enthalten sind, werden diese ebenfalls umgesetzt. Der $SO_2$ − Gehalt im Abgas kann auf Schwefelsäure oder elementaren Schwefel verarbeitet werden. Wenn der $SO_2$ − Gehalt auf Schwefelsäure verarbeitet wird, erfolgt eine Nachverbrennung des CO − Gehaltes im Abgas vor dem Einsatz in die Schwefelsäureanlage. Die Grundeinstellung des Sauerstoffpartialdruckes in der Wirbelschicht wird durch Regelung der eingeblasenen Luftmenge in Abhängigkeit vom in der Wirbelschicht enthaltenden Brennstoff so vorgenommen, daß eine nahestöchiometrische Verbrennung des Brennstoffes erfolgt. Bei dieser Grundeinstellung wird der nach der Reaktionsgleichung

$$Na_2SO_4 \;+\; Al_2O_3 \;=\; 2\,NaAlO_2 \;+\; SO_2 \;+\; 1/2\,O_2$$

entstehende Sauerstoff berücksichtigt. Eine Feineinstellung bzw. Kontrolle erfolgt durch Messung des CO − Gehaltes im Abgas.

Die Vorteile der Erfindung bestehen darin, daß nicht in der schmelzflüssigen Phase gearbeitet werden muß und auch die intermediäre Bildung schmelzflüssiger Phase von $Na_2S - Na_2SO_4$ vermieden wird. Dadurch wird eine Ansatzbildung sowie die Bildung von $H_2S$ mit Sicherheit vermieden. Die zu verarbeitenden Stoffe können in der vorliegenden Form ohne vorherige Pelletierung eingesetzt werden und auch eine Aufmahlung nach der Behandlung ist nicht erforderlich.

Eine vorzugsweise Ausgestaltung besteht darin, daß die Zusatzstoffe gemäß c) in 1,2 − bis 3 − facher stöchiometrischer Menge zugesetzt werden. Mit dieser Menge wird der Alkaligehalt in sehr wirtschaftlicher Weise umgesetzt.

Eine vorzugsweise Ausgestaltung besteht darin, daß der Sauerstoffpartialdruck gemäß b) $10^{-6}$ bis $10^{-13}$ bar beträgt und die Temperatur gemäß d) 1000 bis 1200 ˚C beträgt. Dadurch wird ein hoher Umsatz bei kurzer Verweilzeit erzielt.

Eine vorzugsweise Ausgestaltung besteht darin, daß die thermische Spaltung in einer zirkulierenden Wirbelschicht erfolgt. Das System der zirkulierenden Wirbelschicht besteht aus dem Wirbelschichtreaktor, dem Rückführzyklon und der Rückführleitung. Dieses Wirbelschichtprinzip zeichnet sich dadurch aus, daß im Unterschied zur "klassischen" Wirbelschicht, bei der eine dichte Phase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Staubraum ist nicht vorhanden, jedoch nimmt innerhalb des Reaktors die Feststoffkonzentration von unten nach oben ständig ab. Aus dem oberen Teil des Reaktors wird eine Gas − Feststoff − Suspension ausgetragen. Bei der Definition der Betriebsbedingungen über die Kennzahlen von Froude und Archimedes ergeben sich die Bereiche:

$$0{,}1 \;\leq\; 3/4 \,\cdot\, Fr^2 \,\cdot\, \frac{\rho_g}{\rho_k - \rho_g} \;\leq\; 10 \,,$$

bzw.

$$0{,}01 \leq Ar \leq 100 \,,$$

wobei

$$Ar = \frac{d_k^3 \cdot g \, (\rho k - \rho g)}{\rho g \cdot \nu^2}$$

und

$$Fr^2 = \frac{u^2}{g \cdot d_k}$$

sind.

Es bedeuten:

u die relative Gasgeschwindigkeit in m/sec.

Ar die Archimedes – Zahl

Fr die Froude – Zahl

$\rho g$ die Dichte des Gases in kg/m$^3$

$\rho k$ die Dichte des Feststoffteilchens in kg/m$^3$

$d_k$ den Durchmesser des kugelförmigen Teilchens in m

$\nu$ die kinematische Zähigkeit in m$^2$/sec.

g die Gravitationskonstante in m/sec.$^2$

Die aus dem Wirbelschichtreaktor ausgetragene Suspension wird in den Rückführzyklon der zirkulie – renden Wirbelschicht geleitet, dort weitgehend von Feststoff befreit, und der abgeschiedene Feststoff wird derart in den Wirbelschichtreaktor zurückgeleitet, daß innerhalb der zirkulierenden Wirbelschicht der Feststoffumlauf mindestens das Vierfache des im Wirbelschichtreaktor befindlichen Feststoffgewichtes beträgt. In den Wirbelschichtreaktor wird neben der Fluidisierungsluft Sekundärluft und evtl. Tertiärluft in den oberen Teil des Reaktors zur Verbrennung von CO eingeleitet. In einer zirkulierenden Wirbelschicht werden sehr gute Umsätze bei geringen Mengen an Zusatzstoffen erzielt.

Eine vorzugsweise Ausgestaltung besteht darin, daß das Abgas nach Entfernung des $SO_2$ – Gehalts gemäß f) in eine wäßrige Lösung von $NaAlO_2$ eingeleitet wird, das gebildete $Al(OH)_3$ von der $Na_2CO_3$ – haltigen Lösung abgetrennt und wieder in c) eingesetzt wird. Dadurch wird der für die Verarbeitung erforderliche Zusatzstoff wiedergewonnen, und es fällt als Produkt nur $Na_2CO_3$ an, das z.B. für eine Rauchgasentschwefelung, Endgaswäsche einer Schwefelsäureanlage oder als Reagenz in chemischen Prozessen verwendet werden kann. Außerdem wird ein Teil des $CO_2$ aus dem Abgas gebunden.

Eine vorzugsweise Ausgestaltung besteht darin, daß aus der wäßrigen Lösung von $NaAlO_2$ vor der Einleitung des Abgases Verunreinigungen entfernt werden. Dadurch wird ein reines $Na_2CO_3$ erzeugt.

Eine vorzugsweise Ausgestaltung besteht darin, daß in c) ein Zusatz von MgO und/oder $MgSO_4$ enthaltenden Stoffen in einer Menge von 5 bis 10 Gew. – %, bezogen auf den Gehalt an $Na_2SO_4$ und $K_2SO_4$, erfolgt. Die Zusätze üben eine katalytische Wirkung auf die Spaltung in reduzierender Atmospäre aus, wodurch bei gleichem Umsatz mit niedrigeren Temperaturen gearbeitet werden kann. Falls diese Stoffe bereits in ausreichender Menge in den zu verarbeitenden Stoffen enthalten sind, ist ein Zusatz nicht erforderlich.

Eine vorzugsweise Ausgestaltung besteht darin, daß beim Einsatz von Natrium – oder Kaliumsulfat enthaltenden Stoffen, die wesentliche Mengen an Eisensulfat enthalten, eine zweistufige thermische Spal – tung durchgeführt wird, wobei die erste Stufe mit den Merkmalen a) bis e) durchgeführt wird, Gas und Feststoff aus der ersten Stufe in die Wirbelschicht der zweiten Stufe geleitet werden, der Sauerstoffpartial – druck in der zweiten Stufe in Abhängigkeit von der Temperatur auf einen Wert im Bereich der Stabilität der Eisenoxide erhöht und der $SO_2$ – Gehalt aus dem Abgas der zweiten Stufe entfernt wird. Dadurch wird erreicht, daß in der ersten Stufe eine vollständige Umsetzung der Alkalisulfate zu Alkalialuminaten erfolgt und in der zweiten Stufe das Eisensulfat in Eisenoxide und $SO_2$ umgesetzt wird. Bei einer klassischen Wirbelschicht sind zwei Wirbelschichten erforderlich. Bei einer zirkulierenden Wirbelschicht erfolgt die zweite Stufe im oberen Teil des Wirbelschichtreaktors durch Einleiten von Luft mit entsprechender Erhöhung des Sauerstoffpartialdruckes in diesem Teil.

Die Erfindung wird anhand von Beispielen und Figuren näher erläutert.

Fig. 1 zeigt Stabilitätsbereiche der Natrium − oder Kaliumaluminatbildung, in denen das erfindungsge − mäße Verfahren durchgeführt wird, sowie die Stabilitätsbereiche von $Na_2S$ und $Na_2SO_4$ in Abhängigkeit von Temperatur, Sauerstoffpartialdruck und $SO_2$ − Gehalt.

Fig. 2 zeigt den Stabilitätsbereich der Natrium − oder Kaliumaluminatbildung sowie Stabilitätsbereiche von Eisensulfiden, Eisenoxiden, Natriumsulfid und Natriumsulfat in Abhängigkeit von Temperatur, Sauer − stoffpartialdruck und einem $SO_2$ − Gehalt von 10%.

Fig. 3 ist ein Fließschema des erfindungsgemäßen Verfahrens für Natrium − oder Kaliumsulfat enthal − tende Stoffe, die sehr geringe Mengen an anderen Metallsulfaten enthalten.

Fig. 4 ist ein Fließschema des erfindungsgemäßen Verfahrens für Stoffe, die nur geringe Mengen an Natrium − oder Kaliumsulfat und wesentlich höhere Mengen an anderen Metallsulfaten, z.B. Eisensulfate, enthalten.

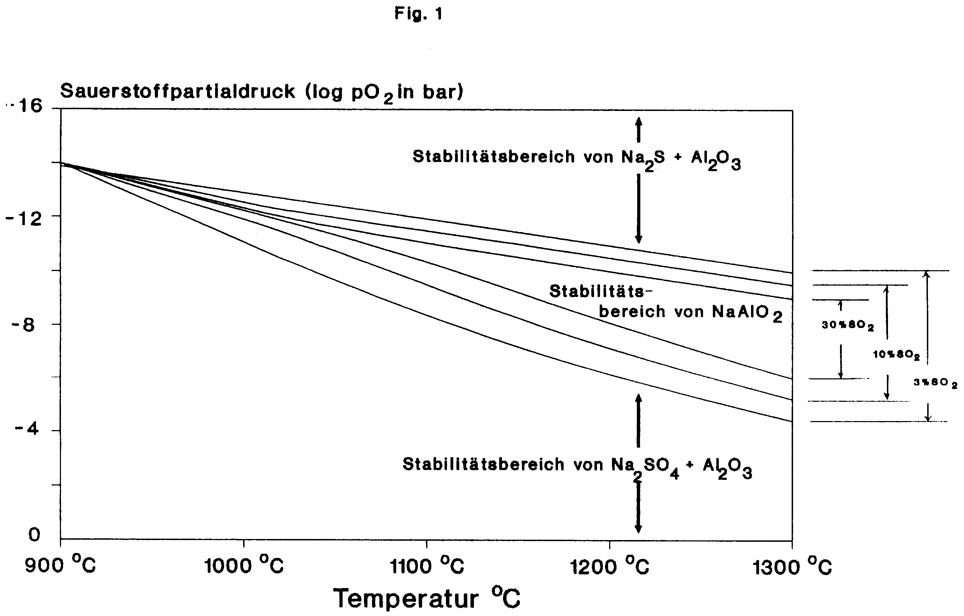

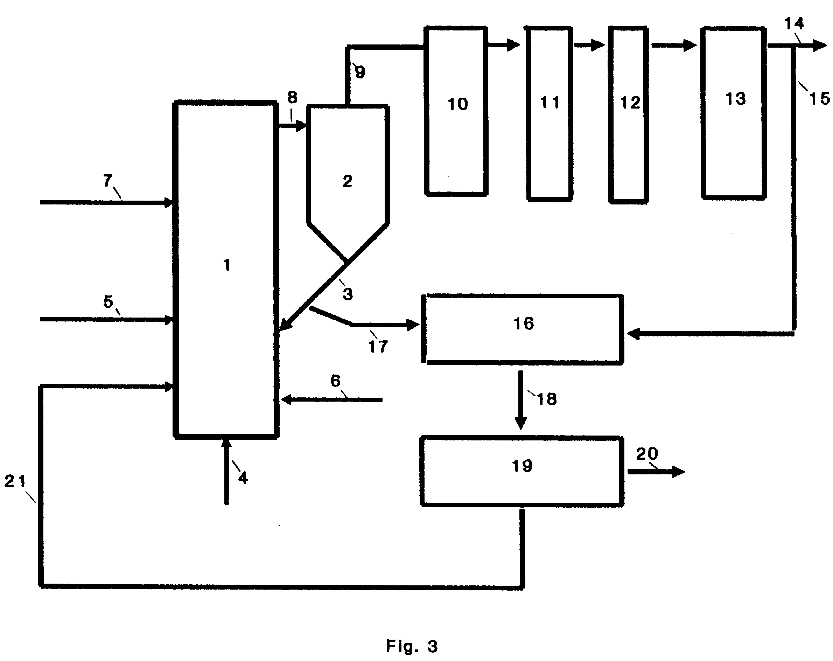

In Fig. 3 ist ein Beispiel der Behandlung von reinem Natriumsulfat in einer zirkulierenden Wirbelschicht dargestellt. Die zirkulierende Wirbelschicht besteht aus dem Wirbelschichtreaktor (1), dem Rückführzyklon (2) und der Rückführleitung (3). Der Wirbelschichtreaktor (1) hat einen Innendurchmesser von 0,36 m und eine Höhe von 6,6 m. Über Leitung (4) wird Fluidisierungsgas und über Leitung (5) das zu behandelnde Material in den Reaktor (1) eingeleitet. Über Leitung (6) wird Erdöl und über Leitung (7) Sekundärluft in den Reaktor eingeleitet. Durch Verteilung der Luftzufuhr wird das Sauerstoffpotential im Bereich der Natriuma − luminatbildung (Fig. 1) eingestellt. Nach dem Erreichen der stationären Bedingungen wird über Leitung (21) Aluminiumhydroxid in den Reaktor (1) zurückgeführt. Über Leitung (8) wird die aus dem Reaktor (1) austretende Suspension in den Rückführzyklon (2) geleitet. Der im Zyklon (2) abgeschiedene Feststoff wird über die Rückführleitung (3) wieder in den Reaktor (1) zurückgeleitet. Über Leitung (9) wird das Abgas in die Nachbrennkammer (10) geleitet, dort nachverbrannt, dann im Abhitzekessel (11) und Wärmetauscher (12) abgekühlt und nach einer nicht dargestellten Reinigung in eine Schwefelsäure − Kontaktanlage (13) geleitet. Über Leitung (14) wird das Abgas der Schwefelsäure − Kontaktanlage abgeführt. Über Leitung (15) wird ein Teilstrom des $CO_2$ − haltigen und $SO_2$ − freien Abgases in den Rührtank (16) geleitet. Über Leitung (17) wird Material aus der zirkulierenden Wirbelschicht abgezogen, in einem nicht dargestellten Wirbelkühler abgekühlt und dann in den Rührtank (16) geleitet. Im Rührtank (16) erfolgt die Bildung und Fällung von Al − $(OH)_3$. Die Suspension wird über Leitung (18) in eine Filtration (19) geleitet, wo das gebildete $Al(OH)_3$ von der $Na_2CO_3$ − haltigen Lösung abgetrennt wird. Die $Na_2CO_3$ − haltige Lösung wird über Leitung (20) abgeführt. Das $AlOH_3$ wird über Leitung (21) wieder in den Wirbelschichtreaktor (1) eingesetzt.

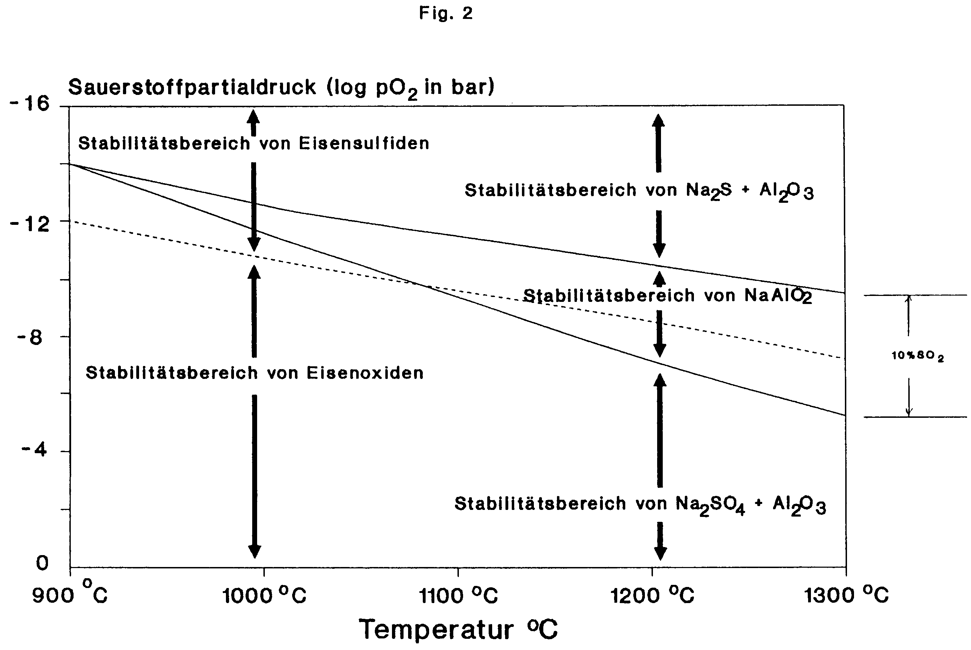

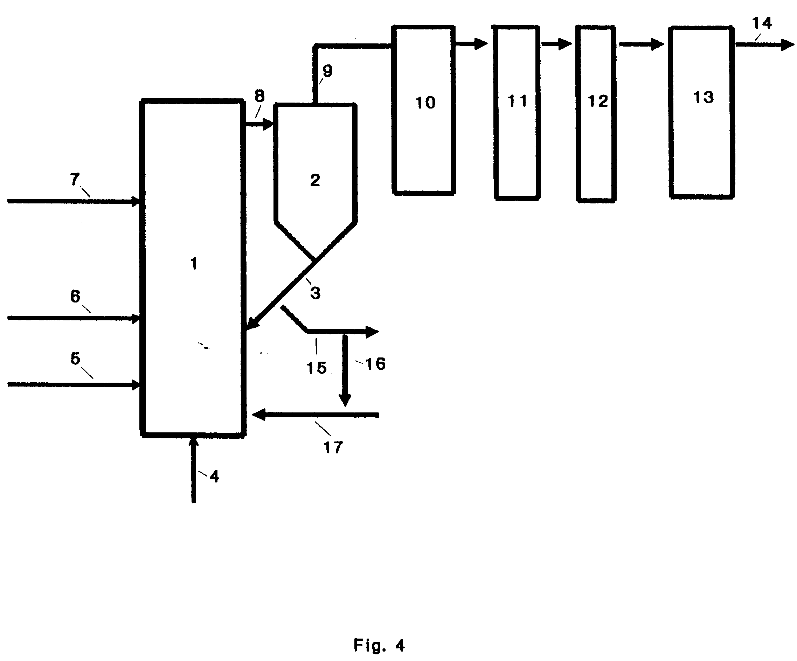

In Fig. 4 ist eine zweistufige Röstung in einer zirkulierenden Wirbelschicht dargestellt. Das System der zirkulierenden Wirbelschicht besteht aus dem Wirbelschichtreaktor (1), dem Rückführzyklon (2) und der Rückführleitung (3). Über Leitung (4) wird Fluidisierungsluft in den Wirbelschichtreaktor eingeleitet, über Leitung (5) das zu behandelnde Material, über Leitung (6) Sekundärluft und über Leitung (7) Tertiärluft. Mit der Fluidisierungsluft und der Sekundärluft wird das Sauerstoffpotential in der ersten Stufe der Wirbel − schicht im Wirbelschichtreaktor (1) im Bereich der Natriumaluminatbildung (Fi.g 1) eingestellt. Mit der Tertiärluft wird das Sauerstoffpotential in der zweiten Stufe im oberen Teil des Wirbelschichtreaktors (1) im Bereich der Stabilität der Eisenoxide (Fig. 2) eingestellt. Über Leitung (8) wird die aus dem Wirbelschich − treaktor (1) austretende Suspension in den Rückführzyklon (2) geleitet. Der dort abgeschiedene Feststoff wird über die Rückführleitung (3) in den Wirbelschichtreaktor (1) zurückgeleitet. Über Leitung (15) erfolgt der Austrag des Feststoffes aus der zirkulierenden Wirbelschicht. Die Positionen 9 bis 14 entsprechen den Positionen in der Fig. 3.

In Tabelle I sind die Analysen für neun verschiedene Materialien aufgeführt.

In Tabelle II sind Versuchsergebnisse mit diesen Materialien angegeben. Die $O_2$ − Partialdrücke wurden anhand der CO − und $H_2$ − Gehalte im Abgas eingestellt. Der MgO − Zusatz im Versuch Nr. 9 betrug 5 Gew. − % bezogen auf den Gehalt an $Na_2SO_4$ und $K_2SO_4$. In Nr. 12 bestand die zugesetzte Asche aus Asche aus der Kohleverbrennung in einer zirkulierenden Wirbelschicht. Bei den zweistufigen Versuchen Nrn. 13, 14, 17 und 18 bedeutet die erste Angabe des $O_2$ − Partialdrucks den Partialdruck in der ersten Stufe und die zweite den Partialdruck in der zweiten Stufe.

Die Versuche wurden in der zirkulierenden Wirbelschicht durchgeführt.

EP 0 540 072 A1

## Tabelle I

| Material Nr. Analyse | 1 Gew. % | 2 Gew. % | 3 Gew. % | 4 Gew. % | 5 Gew. % | 6 Gew. % | 7 Gew. % | 8 Gew. % | 9 Gew. % |
|---|---|---|---|---|---|---|---|---|---|
| $H_2SO_4$ | 0 | 60,2 | 21,8 | 37,5 | 10,8 | 15,2 | 56,2 | 76,2 | 49,4 |
| $FeSO_4$ | 0 | 1,0 | 3,6 | 0,8 | 52,2 | 48,5 | 2,1 | - | 6,2 x) |
| $Al_2(SO_4)_3$ | 0 | 1,8 | 0,2 | - | 1,8 | 1,2 | 0,2 | - | 0,2 |
| $MgSO_4$ | 0 | 0,8 | 3,2 | - | 0,2 | 0,1 | - | - | 0,1 |
| $CaSO_4$ | 0 | 0,1 | 0,1 | - | - | - | - | - | 0,1 |
| $MnSO_4$ | 0 | - | 0,2 | 0,1 | - | 5,2 | - | - | - |
| $TiOSO_4$ | 0 | 0,3 | 4,1 | 0,8 | 5,6 | 0,1 | - | - | 0,2 |
| $Cr_2(SO_4)_3$ | 0 | - | 0,4 | 0,3 | 0,2 | - | - | - | 0,1 |
| $CuSO_4$ | 0 | - | - | - | - | 0,1 | - | - | - |
| $ZnSO_4$ | 0 | - | - | - | - | 0,1 | - | - | 0,8 |
| $NiSO_4$ | 0 | - | - | 0,1 | - | 1,2 | - | - | 0,2 |
| $VOSO_4$ | 0 | - | 0,5 | 0,1 | 0,1 | 0,2 | - | - | 0,1 |
| $K_2SO_4$ | 0 | 0,6 | 10,1 | 2,7 | - | 0,1 | - | 0,2 | 0,2 |
| $Na_2SO_4$ | 99,9 | 2,7 | 44,0 | 6,8 | 3,8 | 3,6 | 1,6 | 1,4 | 0,7 |
| $(NH_4)SO_4$ | 0 | - | - | - | - | - | 4,8 | - | - |
| Arsensäure | - | - | - | - | - | - | - | - | 3,2 |
| Org. Subst. | 0 | 1,1 | 0,5 | 28,1 | 0,8 | 0,5 | 1,5 | 5,2 | - |
| $H_2O$ ges. (mit Kristallwasser) | 0,1 | 31,0 | 11,2 | 22,3 | 24,3 | 23,6 | 33,1 | 16,2 | 37,5 |
| Sonstige | - | 0,4 | 0,1 | 0,4 | 0,2 | 0,3 | 0,5 | 0,8 | 1,0 |

x) teilweise als Eisenarsenate

Tabelle II

| Vers. Nr. | Material Nr. | Temp. °C | $O_2$-Partialdruck bar | Na/K/Al Mol.Verhältnis | Zusatz | Verweilzeit min. | S im Austrag Gew. % | $SO_2$ im Abgas Vol.% (tr.) | Vermerk |
|---|---|---|---|---|---|---|---|---|---|
| 1 | 1 | 1000 | $10^{-12}$ | 1 : 2 | $Al_2O_3$ | 45 | 0,5 | 8,4 | 1-stufig |
| 2 | 1 | 1100 | $10^{-11}$ | 1 : 2 | $Al_2O_3$ | 40 | 0,3 | 9,3 | 1-stufig |
| 3 | 1 | 900 | $10^{-14}$ | 1 : 2 | $Al_2O_3$ | 50 | 5,3 | 6,2 | 1-stufig |
| 4 | 1 | 1100 | $10^{-11}$ | 2 : 1 | $Al_2O_3$ | abgebrochen | 7,9 | - | Agglomerat |
| 5 | 1 | 1100 | $10^{-16}$ | 1 : 2 | $Al_2O_3$ | abgebrochen | 6,8 | - | Agglomerat |
| 6 | 1 | 1100 | $10^{-2}$ | 1 : 2 | $Al_2O_3$ | abgebrochen | 8,5 | - | Agglomerat |
| 7 | 1 | 1100 | $10^{-6}$ | 1 : 3 | $Al(OH)_3$ | abgebrochen | 8,2 | - | Agglomerat |
| 8 | 1 | 1100 | $10^{-11}$ | 1 : 2 | $Al_2O_3$ | 30 | 0,2 | 9,8 | 1-stufig |
| 9 | 1 | 1100 | $10^{-11}$ | 1 : 2 | $Al(OH)_3/MgO$ | 25 | 0,1 | 10,2 | 1-stufig |
| 10 | 2 | 1050 | $10^{-12}$ | 1 : 2 | $Al(OH)_3$ | 30 | 0,2 | 9,8 | 1-stufig |
| 11 | 3 | 1100 | $10^{-11}$ | 1 : 2 | $Al_2O_3$ | 30 | 0,3 | 9,7 | 1-stufig |
| 12 | 4 | 1050 | $10^{-12}$ | 1 : 2 | $Al_2O_3$ | 35 | 0,2 | 9,4 | 1-stufig |
| 13 | 5 | 1050 | $10^{-12}/10^{-8}$ | 1 : 2 | Bauxit | 35 | 0,2 | 8,6 | 2-stufig |
| 14 | 6 | 1050 | $10^{-12}/10^{-8}$ | 1 : 2 | Asche | 35 | 0,1 | 8,7 | 2-stufig |
| 15 | 7 | 1050 | $10^{-12}$ | 1 : 3 | $Al_2O_3$ | 30 | 0,2 | 9,2 | 1-stufig |
| 16 | 8 | 1050 | $10^{-12}$ | 1 : 2 | $Al_2O_3$ | 25 | 0,2 | 9,8 | 1-stufig |
| 17 | 9 | 1050 | $10^{-12}/10^{-1}$ | 1 : 2 | Bauxit | 30 | 0,2 | 9,4 | 2-stufig |
| 18 | 9 | 900 | $10^{-14}/10^{-1}$ | 1 : 2 | Bauxit | 35 | 0,4 | 9,2 | 2-stufig |

## Patentansprüche

1. Verfahren zur Spaltung von Natriumsulfat oder Kaliumsulfat enthaltenden Stoffen unter Abspaltung von $SO_2$ durch thermische Behandlung unter reduzierenden Bedingungen und unter Zusatz von $Al_2O_3$

enthaltenden Stoffen, dadurch gekennzeichnet, daß die thermische Spaltung erfolgt

a) in einer Wirbelschicht,

b) in reduzierender Atmosphäre im Gebiet der $NaAlO_2$ – Bildung in Abhängigkeit vom $SO_2$ – Partialdruck mit einem Sauerstoff – Partialdruck von $10^{-4}$ bis $10^{-14}$ bar,

c) unter Zusatz von $Al_2O_3$ und/oder $Al(OH)_3$ enthaltenden Stoffen mit einer Korngröße unter 3 mm in einer zur Bildung von $NaAlO_2$ überstöchiometrischen Menge,

d) bei Temperaturen von 900 – 1300˚C,

e) unter Erzeugung mindestens eines Teiles der erforderlichen Reaktionswärme durch Verbrennung von kohlenstoffhaltigen Stoffen in der Wirbelschicht, und

f) unter Entfernung des $SO_2$ – Gehaltes aus dem Abgas.

2. Verfahren nach Anspruch 1, dadurch gekennzeichnet, daß die Zusatzstoffe gemäß c) in 1,2 – bis 3 – facher stöchiometrischer Menge zugesetzt werden.

3. Verfahren nach Anspruch 1 oder 2, dadurch gekennzeichnet, daß der Sauerstoffpartialdruck gemäß b) $10^{-6}$ bis $10^{-13}$ bar beträgt und die Temperatur gemäß d) 1000 bis 1200˚C beträgt.

4. Verfahren nach einem der Ansprüche 1 bis 3, dadurch gekennzeichnet, daß die thermische Spaltung in einer zirkulierenden Wirbelschicht erfolgt.

5. Verfahren nach einem der Ansprüche 1 bis 4, dadurch gekennzeichnet, daß das Abgas nach Entfer – nung des $SO_2$ – Gehalts gemäß f) in eine wäßrige Losung von $NaAlO_2$ eingeleitet wird, das gebildete $Al(OH)_3$ von der $Na_2CO_3$ – haltigen Lösung abgetrennt und wieder in c) eingesetzt wird.

6. Verfahren nach Anspruch 5, dadurch gekennzeichnet, daß aus der wäßrigen Lösung von $NaAlO_2$ vor der Einleitung des Abgases Verunreinigungen entfernt werden.

7. Verfahren nach einem der Ansprüche 1 bis 6, dadurch gekennzeichnet, daß in c) ein Zusatz von MgO und/oder $MgSO_4$ enthaltenden Stoffen in einer Menge von 5 bis 10 Gew. – %, bezogen auf den Gehalt an $Na_2SO_4$ und $K_2SO_4$, erfolgt.

8. Verfahren nach einem der Ansprüche 1 bis 7, dadurch gekennzeichnet, daß beim Einsatz von Natrium – oder Kaliumsulfat enthaltenden Stoffen, die wesentliche Mengen an Eisensulfat enthalten, eine zweistufige thermische Spaltung durchgeführt wird, wobei die erste Stufe mit den Merkmalen a) bis e) durchgeführt wird, Gas und Feststoff aus der ersten Stufe in die Wirbelschicht der zweiten Stufe geleitet werden, der Sauerstoffpartialdruck in der zweiten Stufe in Abhängigkeit von der Temperatur auf einen Wert im Bereich der Stabilität der Eisenoxide erhöht und der $SO_2$ – Gehalt aus dem Abgas der zweiten Stufe entfernt wird.

Fig. 1

Fig. 2

Sauerstoffpartialdruck (log $pO_2$ in bar)

Temperatur °C

Stabilitätsbereich von Eisensulfiden

Stabilitätsbereich von Eisenoxiden

Stabilitätsbereich von $Na_2SO_4$ + $Al_2O_3$

Stabilitätsbereich von $NaAlO_2$

Stabilitätsbereich von $Na_2S$ + $Al_2O_3$

10% $SO_2$

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | US-A-4 035 228 (SHEELEY ET AL) <br> * Anspruch 1 * <br> --- | 1 | C01F7/76 |
| A | DE-B-2 123 201 (SONOCO PRODUCTS) <br> * Anspruch 1 * <br> --- | 1 | |
| A <br><br> D | WO-A-8 301 437 (ROCKWELL INTERNATIONAL CORP.) <br> * Anspruch 1 * <br> & EP-A-0 091 948 <br> --- | 1 | |
| A | EP-A-0 244 266 (MEI SYSTEMS INCORPORATED) <br> * Anspruch 16 * <br> --- | 1 | |
| A | CHEMICAL ABSTRACTS, vol. 93, no. 12, <br> 22. September 1980, Columbus, Ohio, US; <br> abstract no. 119687q, <br> * Zusammenfassung * <br> & NEFTEPERERAB. NEFTEKHIM. (MOSCOW) <br> Nr. 3, 1980, <br> Seiten 38 – 41 <br> BOGDANOV ET AL | 1 | |

| | | RECHERCHIERTE SACHGEBIETE (Int. Cl.5) |
|---|---|---|
| | ----- | C01F <br> C01B <br> D21C |

Der vorliegende Recherchenbericht wurde für alle Patentansprüche erstellt

| Recherchenort | Abschlußdatum der Recherche | Prüfer |
|---|---|---|
| BERLIN | 04 JANUAR 1993 | CLEMENT J-P. |